(19) Europäisches Patentamt / European Patent Office / Office européen des brevets

(11) **EP 2 945 299 B1**

(12) **EUROPEAN PATENT SPECIFICATION**

(45) Date of publication and mention
of the grant of the patent:
**04.04.2018 Bulletin 2018/14**

(51) Int Cl.:
*H04B 7/02* (2018.01)          *H04B 7/04* (2017.01)
*H04B 7/06* (2006.01)          *H04B 7/155* (2006.01)
*H04J 11/00* (2006.01)

(21) Application number: **14305709.9**

(22) Date of filing: **15.05.2014**

(54) **Apparatus, method and computer program for a transceiver of a mobile communication system**

Vorrichtung, Verfahren und Computerprogramm für einen Sender-Empfänger eines mobilen Kommunikationssystems

Appareil, procédé et programme informatique pour un émetteur-récepteur d'un système de communication mobile

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2015 Bulletin 2015/47**

(73) Proprietor: **ALCATEL LUCENT
92100 Boulogne-Billancourt (FR)**

(72) Inventors:
• **Schaepperle, Joerg
70435 Stuttgart (DE)**
• **Nguyen, Le Hang
70435 Stuttgart (DE)**

(74) Representative: **Wetzel, Emmanuelle
Nokia Solutions and Networks GmbH & Co. KG
Intellectual Property Business Group
70430 Stuttgart (DE)**

(56) References cited:
EP-A1- 2 375 604          WO-A2-2010/105210
US-A1- 2011 096 851

• **ARTIGA XAVIER ET AL: "On the selection of radiating elements for compact indoor massive-multiple input multiple output base stations", IET MICROWAVES, ANTENNAS & PROPAGATION, THE INSTITUTION OF ENGINEERING AND TECHNOLOGY, UNITED KINGDOM, vol. 8, no. 1, 8 January 2014 (2014-01-08), pages 1-9, XP006047785, ISSN: 1751-8725, DOI: 10.1049/IET-MAP.2013.0343**

**Description**

Technical Field

Embodiments relate to an apparatus, a method and a computer program for a transceiver of a mobile communication system, more particularly but not exclusively, to a precoding concept based on three basically perpendicular polarization directions.

Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The demands are growing for both directions of transmission, in the DownLink (DL) for transmission from the network infrastructure to a mobile transceiver, as well as in the UpLink (UL) for transmission from a mobile transceiver to the network infrastructure.

Conventional communication systems make use of different electric field polarizations, where the different polarizations allow for diversity or combining gains. For example, cross polarized antennas, which comprise orthogonally oriented antenna elements, are used to transmit and receive radio signals having different polarizations.

Generally, an electromagnetic field may contain three degrees of freedom associated to three electric polarization directions. The number of degrees of freedom exploited by conventional wireless communication systems may be limited by the applied antenna and by the transmit techniques.

Further details on polarization directions may be found in
Bruno Clerckx and Claude Oestges: MIMO Wireless Networks, second edition, Academic Press 2013;
Andrews, M.R., Mitra, P.P., and DeCarvalho, R. Tripling the capacity of wireless communications using electromagnetic polarization, Nature, 2001, 409, 316-318; and
Quitin, F.; Oestges, C.; Panahandeh, A.; Horlin, F. & Doncker, P. D., Tri-polarized MIMO systems in real-world channels: channel investigation and performance analysis, Physical Communication Volume 5, Issue 4, Pages 308-316, December 2012.

ARTIGA XAVIER ET AL: "On the selection of radiating elements for compact indoor massive-multiple input multiple output base stations", IET MICROWAVES, ANTENNAS & PROPAGATION, THE INSTITUTION OF ENG INEERING AND TECHNOLOGY, UNITED KINGDOM, vol. 8, na. 1,8 January 2014 (2014-01-08), pages 1-9, discloses different antenna candidates comparison by computing the signal-to-interference plus noise ratio in both noise and interference-limited regimes and for different multi-user MIMO precoding strategies.

WO 2010/105210 A2 discloses vehicle integrated communications system that provides a solution to the poor performance experienced at the cell edge in a cellular communications system due to weak signal strength and high interference levels.

EP 2 375 604 A1 teaches a MIMO system using a cross-polarized antenna structure, even if no ideal XPD can be obtained, the interference between different polarized waves can be reduced to allow an effective precoding to be executed.

US 2011/0096851 A1 discloses a method and apparatus for generating a codebook for a MIMO system with low complexity and excellent performance, even when the polarization of antennas is multi-polarization.

Summary of illustrative Embodiments

The invention refers to the independent claims. Dependent claims refer to further embodiments. The subject-matter in the description going beyond the scope of the claims refers merely to providing examples instead of further embodiments.

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a method and a computer program for a transceiver of a mobile communication system. Embodiments may provide a precoding concept making use of three basically perpendicular polarization directions. Embodiments may therefore be operable to transmit radio signals using three distinct polarization directions enabling improvements in the efficiency of radio transmissions, e.g. in terms of maximum data rate, radiation efficiency, system capacity, fading equalization, etc.

Embodiments provide an apparatus, which is operable in a first transceiver of a mobile communication system. The apparatus comprises a transceiver module, which is operable to communicate with a second transceiver using one or more antennas. The apparatus further comprises a control module, which is operable to control the transceiver module, and which is operable to precode signals communicated to the second transceiver based on three basically perpendicular polarization directions. Embodiments may enable more efficient radio transmission by allowing utilization of three different, perpendicular, or orthogonal polarizations of a radio channel.

In embodiments one of the first and second transceivers may correspond to or be operable in a mobile transceiver and the other one of the first and second transceivers may correspond to or be operable in a base station or relay station transceiver. Embodiments may enable more efficient radio transmission in the uplink and/or downlink of a mobile communication system. In some embodiments the control module may be operable to precode a first signal to be transmitted by the transceiver module using one or more first antenna elements together with a second signal to be transmitted by the transceiver module using one or more second antenna elements and a third signal to be transmitted by the transceiver module using one or more third antenna elements, wherein the first, second and third one or more antenna elements are adapted to different polarization directions. Embodiments may enable utilization of antennas being polarized in three directions. The first, second and third signals, may be further precoded versions of one or more different data streams. In further embodiments at least two of the first, second and third one or more antenna elements may be grouped into one or more cross-polarized antenna elements. Embodiments may enable using multiple cross-polarized antennas, which may be oriented in different directions, to communicate signals in the three polarization directions.

The first, second or third one or more antenna elements may comprise multiple antenna elements in some embodiments. In other words there may be multiple antenna elements per polarization direction in some embodiments. The control module may be operable to use spatial multiplexing or beamforming within one or more of the first, second and/or third antenna elements. Embodiments may enable advanced spatial transmission concepts per polarization direction. For example, the control module may be operable to use beamforming within one or more of the first, second and/or third antenna elements. The control module may be operable to form at least one beam based on information related to polarization properties of a radio channel between the first and second transceivers. Embodiments may further enhance transmission by using polarization adaptive beamforming.

In some embodiments the apparatus may further comprise an interface to a third transceiver. At least one of the signals precoded based on three basically perpendicular polarization directions may be provided to the third transceiver for transmission to the second transceiver. The control module may be operable to receive a signal from a third transceiver using the interface and the control module may be operable to combine the receive signal from the third transceiver with one or more signals received by the transceiver module to decode data based on the three basically perpendicular polarization directions. Embodiments may utilize multiple transceivers or transmission points and combine or coordinate signals among these multiple transmission points, e.g. in terms of differently precoded signals to be transmitted from different transmitters for being combined at a receiver.

In further embodiments the control module may be operable to precode signals of three different data streams being communicated on the three basically perpendicular polarization directions. Embodiments may enable parallel transmission of three data streams along three polarization directions. The control module may be operable to rotate signals across the three basically perpendicular polarization directions using precoding before transmitting the signals. Embodiments may adapt transmission to the polarization condition of a radio channel. In some embodiments the control module may be operable to transmit a first one of the three data streams from the first transceiver to the second transceiver, a second one of the three data streams from a third transceiver to the second transceiver, and a third one of the three data streams from the first and third transceivers to the second transceiver. Embodiments may enable coordinated transmission from multiple transmission points, e.g. multiple base station transceivers or mobile transceivers.

Corresponding to the above, the transceiver module may be operable to receive signals based on the three basically perpendicular polarization directions. The control module may be operable to decode different data streams based on the signals received through the three basically perpendicular polarization directions. Embodiments may enable utilization of the three polarization directions in both directions of transmission. In some embodiments the transceiver module may be operable to receive information related to the three basically perpendicular polarization directions of a radio channel between the first transceiver and the second transceiver from the second transceiver. The control module may be operable to precode signals communicated to the second transceiver based on the information related to the three basically perpendicular polarization directions of the radio channel. Embodiments may use a feedback loop between the transceivers to implement polarization adaptive precoding. The control module may be operable to rotate signals communicated to the second transceiver based on the information related to the three basically perpendicular polarization directions of the radio channel. Embodiments may enable polarization adaptive signal or channel rotations and enhance radio transmission or spectral efficiency.

In further embodiments the control module may be further operable to determine information related to the three basically perpendicular polarization directions of a radio channel between the first transceiver and the second transceiver. The control module may be further operable to provide the information related to the three basically perpendicular polarization directions of a radio channel between the first transceiver and the second transceiver to the second transceiver. Hence, the above described feedback loop may be applied in both directions in some embodiments. The control module may be operable to provide the information related to the three basically perpendicular polarization directions of a radio channel between the first transceiver and the second transceiver to the second transceiver using a codebook index. The codebook may comprise an integer multiple of three of complex weights and the complex weights may have different magnitudes for different polarization directions. Embodiments may enable efficient signaling using codebooks and corresponding codebook indices.

The control module may be operable to determine information related to the three basically perpendicular polarization directions of a joint radio channel between the first transceiver and the second transceiver, and a third transceiver and the second transceiver, and to provide the information related to the three basically perpendicular polarization directions of the joint radio channel to the second and/or the third transceivers. Embodiments enable efficient control signaling in a multipoint transmission scenario. The control module being operable to determine information related to the three basically perpendicular polarization directions of a joint radio channel between the first transceiver and the second transceiver, and a third transceiver and the second transceiver, and to provide the information on the joint radio channel partly to the second transceiver using a first codebook index and partly to the third transceiver using a second codebook index. Embodiments may enable efficient channel feedback signaling in a multipoint transmission scenario using codebooks and corresponding codebook indices.

Embodiments provide a method for a first transceiver of a mobile communication system. The method comprises communicating with a second transceiver using one or more antennas. The method further comprises precoding signals communicated to the second transceiver based on three basically perpendicular polarization directions.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus for a transceiver of a mobile communication system;

Fig. 2 illustrates different antenna arrangements in embodiments;

Fig. 3 illustrates a downlink communication scenario in an embodiment;

Fig. 4 illustrates an uplink communication scenario in an embodiment;

Fig. 5 illustrates a downlink communication scenario with a reflector in an embodiment;

Fig. 6 illustrates an uplink communication scenario with a reflector in an embodiment; and

Fig. 7 shows a block diagram of a flow chart of an embodiment of a method for a transceiver of a mobile communication system.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention.

Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following some embodiments of apparatuses, methods and computer programs for a base station transceiver and a mobile transceiver will be described. Embodiments further provide a base station transceiver and a mobile transceiver comprising such respective apparatuses. Embodiments may provide a transmission concept making use of three basically perpendicular polarization directions of a radio channel.

In wireless communication a single propagation path may transport only two polarization directions orthogonal to the direction of propagation. In channels with more than one dominant path arriving from distinct different directions the superimposed receive field at a single antenna position may contain all three polarization directions. Embodiments make use of the third direction either for transmit/receive diversity or for spatial (polarization) multiplexing. For this purpose appropriate joint transmission from distinct multiple transmission points with at least dual-polarized antenna to a tri-polarized terminal antenna may be used. Embodiments may use pre-coding matrices, which are adapted to the three polarization directions, at a transmitter. The precoding may take into account the polarization diversity of the channel characteristics. In embodiments the transmission concept may be applied to both up- and downlink and it may be extended to antenna arrays at each transmission point.

Embodiments may enable increased capacity and/or fading equalization by exploiting the third polarization direction using appropriate precoding and multi-point transmission. Embodiments may achieve improved transmission efficiency compared to simple point-to-point transmission from tri-polarized to tri-polarized antennas without precoding or compared to multipoint-to-point transmission/reception with dual-polarized antennas. For example, codebooks with two data streams per dual-polarized antenna may be conventionally used. Embodiments may exploit more than two degrees of freedom in the polarization domain. For example, tri-polarized point-to-point link capacity may be higher in embodiments than in dual-polarized systems. For example, in an Orthogonal Frequency Division Multiplexing (OFDM) system, the precoding may be based on one or more symbols or sub-carriers. The precoding may be based on complex weight application to the transmit signals or symbols for the different polarization directions. For example, for each polarization direction there may be a complex weight, which is applied to the transmit signal or symbol, subcarriers, respectively, for said polarization direction.

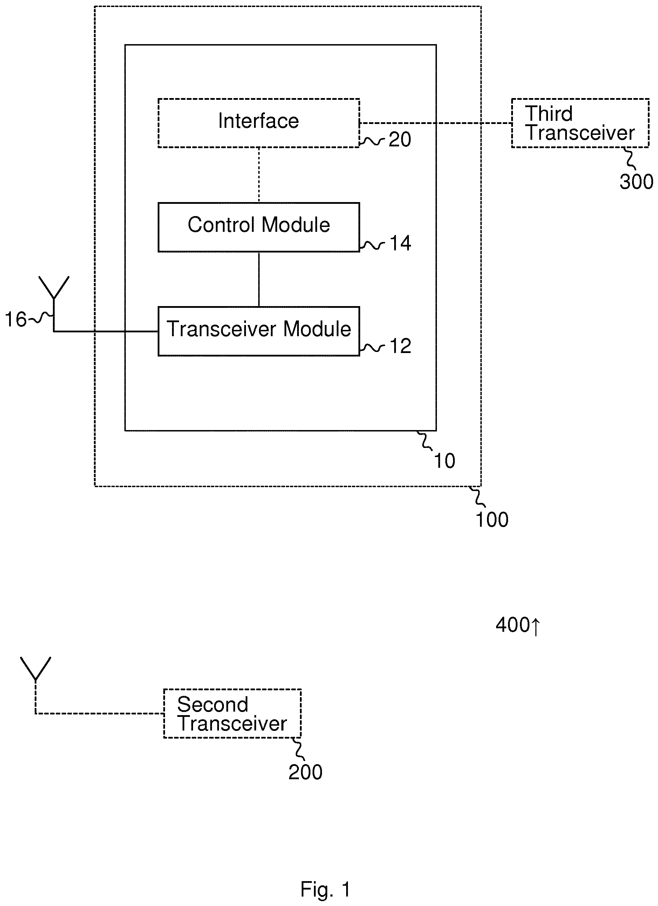

Fig. 1 illustrates a block diagram of an embodiment of an apparatus 10 for a transceiver 100 of a mobile communication system 400. In general, the mobile communication system 400 may, for example, correspond to one of the Third Generation Partnership Project (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by or partly coincide with the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

As shown in Fig. 1 the apparatus 10 comprises a transceiver module 12, which is operable to communicate with a second transceiver 200 using one or more antennas 16. The transceiver module 12 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The apparatus 10 further comprises a control module 14, which is coupled to the transceiver module 12. The control module 14 is operable to control the transceiver module 12. The control module 14 is further operable to precode signals communicated to the second transceiver 200 based on three basically perpendicular polarization directions. In embodiments the control module 14 may be implemented using one or more processing units, one or more processing devices, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general purpose processor, a Digital Signal Processor (DSP), a micro-controller, etc.

As shown in Fig.1 communication is carried out between the first transceiver 100 (dotted lines indicating optional component) and the second transceiver 200. Embodiments further provide a transceiver 100 comprising the apparatus 10. Said communication may be carried out in the uplink or in the downlink. That is to say that one of the first and second transceivers 100, 200 may correspond to a mobile transceiver and the other one of the first and second transceivers 100, 200 may correspond to a base station transceiver. The apparatus 10 may be comprised in or operated in a base station transceiver, a relay station transceiver or a mobile transceiver.

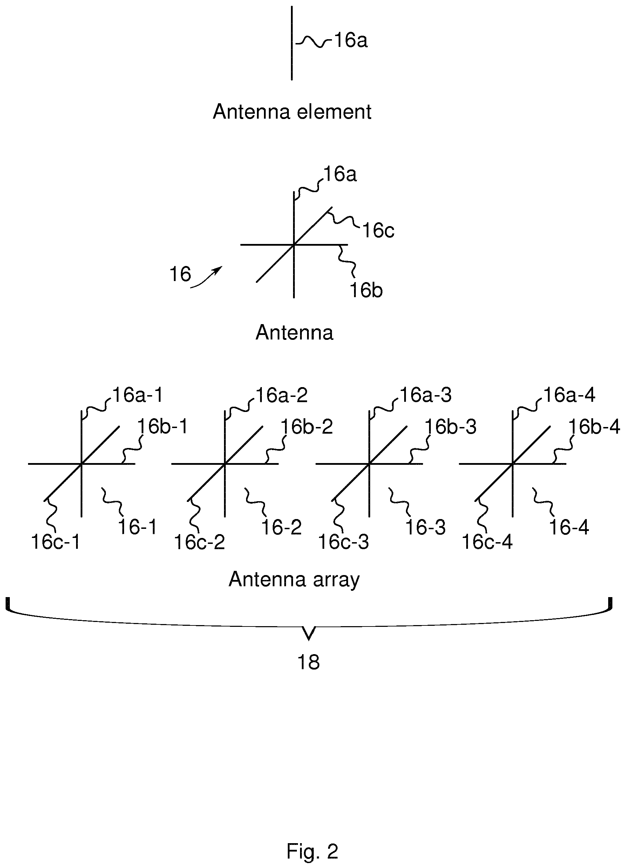

In the sequel the following terminology with respect to antennas and antenna elements will be used. Fig. 2 illustrates different antenna arrangements or configurations in embodiments. An antenna element 16a has a single antenna connector and transmits/receives essentially one polarization direction. An antenna 16 may comprise multiple antenna elements 16a, 16b, 16c at the same position (or close to each other) and it may transmit/receive multiple polarization directions that can be independently modulated. An antenna 16 may have multiple antenna connectors. An antenna array 18 may comprise multiple antennas 16-1, 16-2, 16-3, 16-4 at different positions. Fig. 2 illustrates the terminology for antenna elements 16abc, antennas 16, 16-1, 16-2, 16-3, 16-4 and antenna arrays 18, here shown for dipoles, the same is applicable for patch antennas, or any other kind, type or sort of antennas.

Embodiments of the transceiver apparatus 10 may increase throughput and spectral efficiency by using all three polarization directions supported by the electromagnetic field in three-dimensional space throughout the complete transmission chain consisting of the wireless channel plus antennas and fully exploiting the additional degrees of freedom. Although a single propagation path (approximately a plain wave) may only support two polarization directions orthogonal to the propagation direction, a superposition of multiple propagation paths, as basically present in any realistic radio channel, may transport information on all three polarization directions. Embodiments may use coordinated transmit techniques in such a way that at the receiver at least two arriving waves from different directions superimpose in such a way that all three polarization directions of the resulting field transport (independent) information. Like in Multiple-Input-Multiple-Output (MIMO), where the effect is achieved by increasing the number of antennas, here the capacity may be increased by increasing the number of polarization directions used for modulating data, fading equalization using diversity gain from the different polarization direction may be improved, respectively.

Since a single propagation path can transport only two polarization directions orthogonal to the direction of propagation, at least two paths may be exploited in some embodiments for using three polarization directions. Embodiments may use multiple (at least two) transmission/reception points in a Cooperative Multi-Point (CoMP) system or multiple propagation paths between transmitter and receiver (multipath channel). This may allow receiving up to three independent signals per antenna (with 3 elements) instead of two with, e.g., two cross-polarized antenna elements, and may increase capacity by spatial (polarization) multiplexing or reliability by diversity techniques.

In line with the tri-polarized antennas 16 depicted in Fig 2, in some embodiments the control module 14 is operable to precode a first signal to be transmitted by the transceiver module 12 using one or more first antenna elements 16a together with a second signal to be transmitted by the transceiver module 12 using one or more second antenna elements 16b and a third signal to be transmitted by the transceiver module 12 using one or more third antenna elements 16c. The first 16a, second 16b and third one or more antenna elements 16c are adapted to different polarization directions. For example, at least two of the first 16a, second 16b and third one or more antenna elements 16c are grouped into one or more cross-polarized antenna elements.

For example, a transmit signal may be precoded based on polarization properties of a radio channel. Different complex weights may be applied to a signal and different precoded versions of the signal may be transmitted on antenna elements having different polarizations. The precoding may be adapted in a way that the precoded versions of the transmit signal transmitted using antenna elements oriented in different polarization directions are received from basically only one polarization direction at the receiver based on the properties of the radio channel. In other words in some embodiments the precoding may be adapted to the radio channel in a way that the precoding combined with the signal distortion or manipulation of the radio channel allows generating a receive signal having basically one polarization direction, although signals are transmitted using different polarization directions.

In another embodiment using an antenna array 18 as depicted at the bottom of Fig. 2 wherein the first 16a, second 16b and/or third one or more antenna elements 16c comprises multiple antenna elements, e.g. as antenna elements 16a-1, 16a-2, 16a-3 and 16a-4 (16b-1-4 or 16c-1-4, respectively) in Fig. 2. The control module 14 is then operable to use spatial multiplexing or beamforming within one or more of the first, second and/or third antenna elements 16abc. For example, the control module 14 is operable to use beamforming within the first, second or third antenna elements 16abc-1, 16abc-2, 16abc-3, and 16abc-4. The control module 14 is operable to form at least one beam based on information related to polarization properties of a radio channel between the first and second transceivers 100, 200. In other words based on spatial information on the polarization direction in the radio channel, dedicated beams for the respective polarization directions can be formed.

In some embodiments beamforming and precoding may be carried out in the complex baseband. In other words, signals or symbols processed in terms of precoding and/or beamforming may be processed in the baseband before being transmitted in a transmission band, e.g. HighFrequency band or Radio Frequency band (HF or RF), after having been received in the HF or RF band, respectively. Such conversion may be carried out in terms of a converter, mixer, or any frequency shift operation, etc. In the complex baseband weights for beamforming and/or precoding may be applied using corresponding multiplications with complex weights. In some embodiments such processing may as well be carried out in the transmission band (HF or RF), for example, through application of corresponding phase shifts or amplitude/gain factors.

In some embodiments spatial multiplexing may be used across the different polarization directions or even within in one or more polarization directions and involving antenna elements being oriented in one or more polarization directions. For example, independent propagation paths of the radio channel may be used to precode different data streams, which arrive at the receive antennas having basically the same polarization direction. In other words, MIMO concepts may be used per polarization direction. Polarization multiplexing, i.e. having different data streams arriving from different polarization directions at the receiver, may be used on top of that in some embodiments. Hence, in some embodiments different data streams may be spatially multiplexed and received from basically three perpendicular polarization directions. Within each of the three basically perpendicular polarization directions there may be multiple independent propagation paths, such that multiple spatial sub-channels can be established, which are received in basically the same polarization direction. For example, if there are two spatial sub-channels per polarization direction six parallel data streams may be received.

As has been mentioned above, embodiments may use beamforming to implement a directive antenna, which is to be understood as signal processing means to achieve defined or controlled superposition of the signals transmitted by the individual transmit/receive antenna elements. For example, a geometry of a plurality of transmit/receive antenna elements may correspond to a linear antenna array, a circular antenna array, any two-dimensional antenna array or field, or even an arbitrary antenna array, for as long as geometrical relations between the antenna elements are known or controlled. In some embodiments, a plurality of antenna elements or transmit/receive antennas may correspond to a uniform linear antenna array, wherein the transmit/receive antennas are spaced uniformly, and wherein the distance between two antenna elements may correspond to, for example, half of a wavelength of the carrier frequency of the signals transmitted/received using these antennas. As known for beamforming, by providing phase shifted versions of the same signal to different antenna elements, constructive and destructive superposition of the transmitted/received signals may be achieved for different angular directions with respect to these antennas. The more antennas are used, the higher the overall beamforming gain and the narrower a beam that may be formed. In embodiments a transmit/receive antenna or a transmit/receive antenna element may use an individual beam pattern covering a sector or a cell of the base station transceiver, e.g. a 90° half power beam width antenna pattern to cover a 120° sector or cell. Beamforming may hence use to direct a transmit or receive antenna maximum gain in a certain spatial direction, e.g. using beams steering, it may as well be used to direct a transmit or receive antenna minimum gain in a certain direction, e.g. spatial nulling or interference cancellation.

In a further embodiment the apparatus 20 further comprises an interface 20 (shown as optional component in Fig. 1) to a third transceiver 300. In embodiments an interface of an entity, such as the interface 20, may correspond to any interface adapted to the respective communication or access technology. In some embodiments the apparatus 10 may have multiple interfaces. The one or more interfaces 20 may use the same or different access technologies, protocols, media, etc. For example the interface may correspond to an Ethernet interface, an Asynchronous Transfer Mode (ATM) interface, an X2 interface, etc.

The third transceiver 300 may correspond to a base station transceiver or a mobile transceiver. At least one of the signals precoded based on three basically perpendicular polarization directions is provided to the third transceiver 300 for transmission to the second transceiver 200. In other words, multi-point transmission may be utilized using the three polarization directions. Moreover, in another embodiment the control module 14 may be operable to receive a signal from the third transceiver 300 using the interface 20. The control module 14 is then operable to combine the receive signal from the third transceiver 300 with one or more signals received by the transceiver module 12 to decode data based on the three basically perpendicular polarization directions.

In other words, the first and third transceivers 100, 300 may provide receive signals to each other and then implement combining methods, joint detection, or joint decoding to obtain receive signals for the different polarization directions. In embodiments diversity gains, e.g. using maximum ratio combining or selection combining, or spatial multiplexing gains, may be realized by transceivers, for example, further using Cooperative MultiPoint transmission (CoMP). In another embodiment a special mode for CoMP joint transmission from multiple transmit points with at least dual-polarized antennas to tri-polarized terminal antennas supporting three data streams per tri-polarized receive antenna may be realized. The corresponding mode in the uplink transmits three data streams per terminal antenna and jointly receives them at multiple dual-polarized receive antennas. Some embodiments may enable a possible increase in user data rate by 50 %. Embodiments may make use of more than two degrees of freedom originating from polarization, but still use dual-polarized antennas with different orientations or at different transmission points. As will be further detailed subsequently, embodiments may use enhanced transmit techniques, for example, codebooks with two data streams per dual-polarized antenna.

In general, some embodiments may use antennas for three polarization directions, for example tri-polarized antennas at the terminal. Some embodiments may use either tri-polarized antennas at the base station or multiple transmission/reception points, e.g. base stations, equipped with at least one single and one dual-polarized antennas. In the downlink some embodiments may transmit jointly from different antenna sites or from multiple antennas at a single site to a terminal in such a way that at the terminal's receive antennas all three directions of polarization are used efficiently. In the case where all transmit antennas are located at a single site, multiple propagation paths of the channel can be exploited by, e.g., transmitting at least two different beams in two different directions in such a way that they superimpose at the receiver to a field with three independent polarization directions. In the uplink some embodiments transmit from three mutually orthogonal antenna elements at a terminal in such a way that at least two different projections of the transmitted signal propagate on different paths - each transporting two polarization directions - to the receiver and either they arrive at at least two different receiver sites with at least dual polarized antennas in such a way that the two receiver sites together detect all three transmit polarization directions, or they arrive at a single receiver site from at least two different directions such that all three transmit polarization directions can be detected either with tri-polarized antennas or by separating the spatial streams with an array of at least dual-polarized antennas. In embodiments there may be up to three transmit/receive signals or symbols per antenna of an antenna array.

In some embodiments the control module 14 may therefore also be operable to select a number of transmission points based on tri-polarized channel information. Such channel information may be determined at the respective transmitter apparatus 10, for example, in terms of measurements (e.g. in a time division duplex system) or in terms of received feedback information (e.g. in a frequency division duplex system). That is to say that in some embodiments the transceiver module 12 is operable to receive information related to the three basically perpendicular polarization directions of a radio channel between the first transceiver 100 and the second transceiver 200 from the second transceiver 200. The control module 14 is operable to precode signals communicated to the second transceiver 200 based on the information related to the three basically perpendicular polarization directions of the radio channel.

Additionally or alternatively, the control module 14 may be further operable to determine information related to the three basically perpendicular polarization directions of a radio channel between the first transceiver 100 and the second transceiver 200. The control module 14 may be further operable to provide the information related to the three basically perpendicular polarization directions of a radio channel between the first transceiver 100 and the second transceiver 200 to the second transceiver 200, e.g. to enable exploitation of the three polarization directions in the opposite direction.

In embodiments the transceiver apparatus 10 may use appropriate transmit precoding codebooks for transmission of three data streams per antenna. In the case of multiple transmission sites, each site may use a part of the complete codebook entry. In further embodiments the codebook may be adapted or adaptable to the spatial channel statistics of polarized channels with three-polarized antennas. In other words, the control module 14 may be operable to provide the information related to the three basically perpendicular polarization directions of a radio channel between the first transceiver 100 and the second transceiver 200 to the second transceiver 200 using a codebook index. The codebook may comprise an integer multiple of three of, i.e. 3n, complex weights and the complex weights may have different magnitudes for different polarization directions.

In further embodiments, the control module 14 is operable to determine information related to the three basically perpendicular polarization directions of a joint radio channel between the first transceiver 100 and the second transceiver 200, and a third transceiver 300 and the second transceiver 200. The control module 14 is then operable to provide the information related to the three basically perpendicular polarization directions of the joint radio channel to the second and/or the third transceivers 200, 300. In other words in a multipoint transmission scenario the feedback information on a joint radio channel may be determined and provided.

Moreover, the control module 14 may be operable to determine information related to the three basically perpendicular polarization directions of a joint radio channel between the first transceiver 100 and the second transceiver 200, and a third transceiver 300 and the second transceiver 200. The control module 14 may be further operable to provide the information on the joint radio channel partly to the second transceiver 200 using a first codebook index and partly to the third transceiver 300 using a second codebook index. In other words, feedback information provision may be optimized in some embodiments, e.g. adapted to the respective transmission scenario. A transmission point may be provided with feedback on polarization directions it actually uses and efficient feedback signaling may be enabled.

In embodiments the polarization properties of a radio channel may be considered including one or more antenna directions. That is to say that the orientation of transmit and receive antennas may determine said polarization properties of the radio channel and hence orientation and antenna properties may be considered in the feedback provided. Moreover, with a given orientation and polarization property of a transmit antenna, the control module 14 may consider a rotation of the respective transmit signals based on said antenna and radio channel property. In other words the control module 14 may be operable to rotate signals communicated to the second transceiver 200 based on the information related to the three basically perpendicular polarization directions of the radio channel. That is to say the control module 14 may take into account antenna type and rotation, and corresponding feedback information from the terminal to the base station, vice versa, respectively.

Embodiments may enable a coordination of transmission/reception at different access points in such a way that throughput for a given total transmit power throughput is improved or even maximized, i.e., the three independent channels per antenna may be used efficiently. In other words the control module 14 may be operable to precode signals of three different data streams being communicated on the three basically perpendicular polarization directions in some embodiments. The control module 14 may be operable to rotate signals across the three basically perpendicular polarization directions using precoding before transmitting the signals.

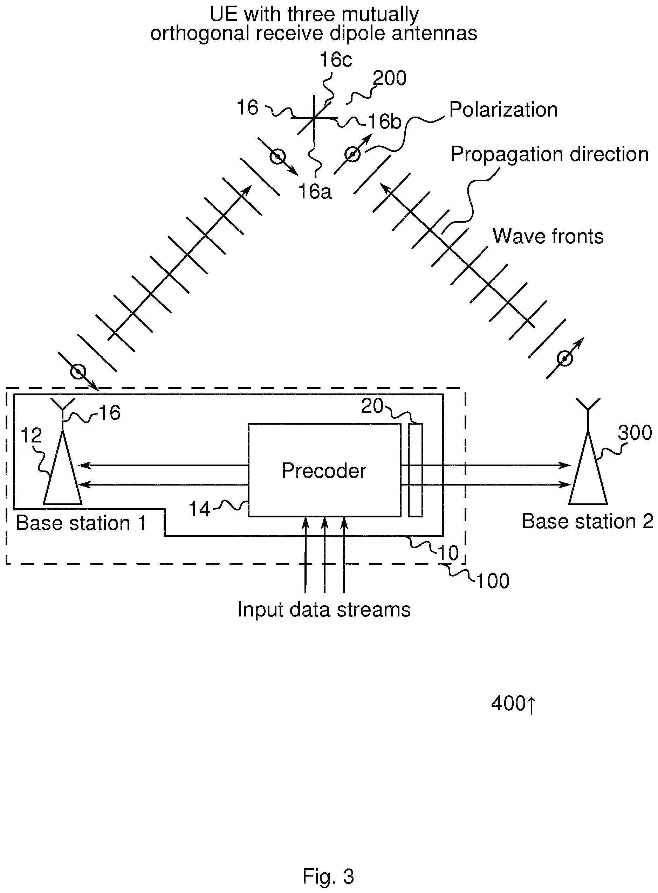

In the following an embodiment will be further detailed, which uses joint transmission from different antenna sites to a tri-polarized antenna. In wireless communications two polarization directions per propagation path can be modulated independently with data. In an embodiment at least two base stations are equipped with transmit antennas for two polarization directions. Fig. 3 illustrates a downlink communication scenario in an embodiment. The embodiment depicted in Fig. 3 comprises a system 400 for using three polarization directions for transmitting from two different antenna sites 100, 300 to a user equipment 200. In other words the first transceiver corresponds to a base station 100, which comprises the apparatus 10. The second transceiver 200 corresponds to a mobile transceiver or UE. The third transceiver 300 corresponds to another base station. By transmitting from two different sites 100, 300, three polarization directions can be received at the UE 200 if it is equipped with three mutually orthogonal dipole or patch antennas 16 for three polarization directions, cf. Fig. 3. In other words the second transceiver 200, i.e. the UE in Fig. 3, may also comprise an embodiment of the transceiver apparatus 10.

The control module 14 on the base station's 100 side is operable to transmit a first one of the three data streams from the first transceiver/base station 100 to the second transceiver/mobile station 200, a second one of the three data streams from a third transceiver/base station 300 to the second transceiver/mobile station 200, and a third one of the three data streams from the first and third transceivers/base stations 100, 300 to the second transceiver/mobile transceiver 200. On the side of the second transceiver/mobile transceiver 200 the transceiver module 12 is operable to receive signals based on the three basically perpendicular polarization directions and the control module 14 is operable to decode different data streams based on the signals received through the three basically perpendicular polarization directions.

For example, base station 100 may modulate a first data stream on the vertical polarization direction and a weighted sum of a second and third data stream on the horizontal polarization direction. Base station 200 also modulates the first data stream to the vertical polarization direction and a weighted sum of a second and a third data stream to the horizontal polarization direction. If the polarization is not changed by the channel (Line Of Sight (LOS)) and the polarization orientation of transmitter 100 and receiver 200 are aligned (antenna mounted on cars, trains, fix relays, etc.), the terminal 200 can receive a superposition of the two transmissions of the first data stream on the vertical polarization direction and a mix of the second and third data streams on the two horizontal polarization directions. The second and third data streams can be separated by applying different receive antenna weight vectors for the two data streams to the signals received by the (mutually orthogonal) horizontal antenna elements and adding the weighted signals.

The precoder or control module 14 may use, e.g., a transmit codebook mapping up to three signals to four antenna elements (2 antenna elements per site 100, 300). In other words, the codebook comprises an integer multiple of three of complex weights, one for each polarization direction. The complex weights may have different magnitudes for different polarization directions. It may assign three weights to the three data streams for each antenna element of the first base station 100 and three additional weights for each antenna element of the second base station 300. Some of the weights may be zero, which means that the corresponding stream is not transmitted from that base station. Each of the data streams is transmitted at least from one of the base stations 100, 300.

The receive signal can be written as product of the channel matrix H, the precoding matrix P as applied by the control module 14 in an embodiment, and the transmit signal vector s. For two cross-polarized transmit antennas, the receive signal can be expressed as

$$
\begin{bmatrix} r_v \\ r_{h1} \\ r_{h2} \end{bmatrix} = \overbrace{\begin{bmatrix} h_{v,1v} & \sqrt{\chi}\,h_{v,1h} & h_{v,2v} & \sqrt{\chi}\,h_{v,2h} \\ \sqrt{\chi}\,h_{h1,1v} & h_{h1,1h} & \sqrt{\chi}\,h_{h1,2v} & h_{h1,2h} \\ \sqrt{\chi}\,h_{h2,1v} & h_{h2,1h} & \sqrt{\chi}\,h_{h2,2v} & h_{h2,2h} \end{bmatrix}}^{H} \overbrace{\begin{bmatrix} p_{1v,1} & p_{1v,2} & p_{1v,3} \\ p_{1h,1} & p_{1h,2} & p_{1h,3} \\ p_{2v,1} & p_{2v,2} & p_{2v,3} \\ p_{2h,1} & p_{2h,2} & p_{2h,3} \end{bmatrix}}^{P} \overbrace{\begin{bmatrix} s_1 \\ s_2 \\ s_3 \end{bmatrix}}^{s}.
$$

Transmit signal vector s has three elements: one data stream for each polarization direction to be detected at the receiver. The precoding matrix **P** distributes the three transmit data streams on the 4 transmit antennas. The first index of the elements denotes the transmit antenna (1v and 1h for the vertical and the horizontal polarization direction of the first transmission point, and 2v,2h for the corresponding antennas at the second transmission point).

A typical channel matrix **H** may have the structure shown in the equation. There are two types of channel matrix elements. Those where channel input and channel output have the same polarization direction (vertical or horizontal) and those that couple different polarization directions, i.e., have a horizontal channel input and a vertical channel output

or vice versa. $\chi$ is the cross-polarization power ratio. When only one polarization direction is transmitted, the cross-polarization power-ratio describes the ratio of the average powers at the receiver 200 on the transmitted polarization direction and on the polarization direction orthogonal to the transmitted direction. I.e., it describes the coupling between the two polarization directions. The ratio may typically be small compared to one.

The factor $\sqrt{\chi}$ in the matrix indicates that there is a power imbalance between channel coefficients that do not change the polarization direction and those that couple different polarization directions. It is defined as, e.g.

$$\sqrt{\chi} := \frac{E\{\rho_{vh}\}}{E\{\rho_{hh}\}} ,$$

where $E\{\rho_{vh}\}$ is the expected value of the received power in vertical polarization direction and $E\{\rho_{hh}\}$ is the expected value of the received power in horizontal direction for a horizontally polarized transmit signal. Sometimes this factor is called depolarization factor. The indices v, h1, h2 denote the three receive antenna elements, one vertical and two horizontal ones.

A special precoding matrix is given by

$$\mathbf{P} = \begin{bmatrix} p_{11} & 0 & 0 \\ 0 & p_{22} & 0 \\ p_{31} & 0 & 0 \\ 0 & 0 & p_{43} \end{bmatrix} . \qquad (2)$$

The first two rows define the transmit weights at the first base station 100 and the last two rows that of the second base station 300. In this case the data streams $s_1$ and $s_2$ need to be known by transmitter $T_1$ (100) and $s_1$ and $s_3$ by transmitter $T_2$ (300). I.e., it might not be necessary to transport all three data streams to both transmitters 100, 300, and a precoding matrix as shown in equation (2) may therefore be advantageous for reducing backhaul traffic. It is likely that any codebook may include a matrix of that type.

Optionally, if all data are available at both transmitters, the precoding matrix may have two additional non-zero elements. They are used to distribute the two data streams intended for the horizontal polarization direction on the two horizontal transmit antenna elements at the two different locations.

$$\mathbf{P} = \begin{bmatrix} p_{11} & 0 & 0 \\ 0 & p_{22} & p_{23} \\ p_{31} & 0 & 0 \\ 0 & p_{42} & p_{43} \end{bmatrix} . \qquad (3)$$

The precoding matrix can be split into sub-matrices for each antenna site. In the above example the first two rows are for the first 100 and the last two rows for the second transmission point 300. The sub-matrices can be taken from the same codebook. The size of this codebook may be smaller than that for the larger overall matrix. This may also reduce the data rate required for channel feedback to the transmission points if the codebooks are used for channel feedback (implicit feedback, feedback of desired precoding matrix). In that case it may be sufficient to send just the index of a part of the complete precoding matrix to the individual transmission points 100, 300.

If the channel modifies the polarization direction, a three by three receive antenna weight matrix W may be applied to the three receive antenna signals in order to separate the data streams. For this the channel coefficients may be estimated and the weights may be calculated as in conventional MIMO systems, e.g., by a Minimum Mean Square Error (MMSE) estimation.

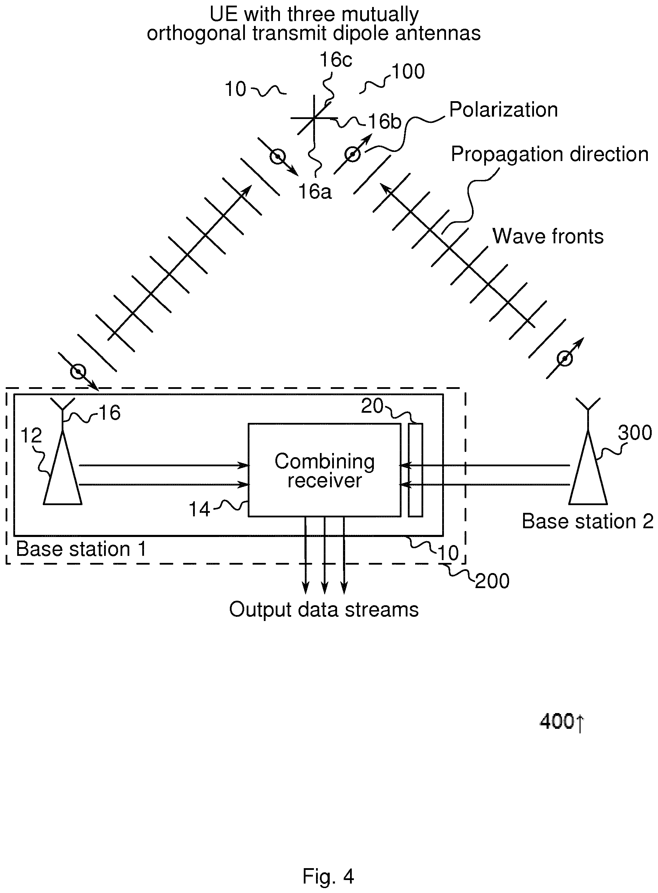

Another embodiment is illustrated in Fig. 4. Fig. 4 illustrates an uplink communication scenario in an embodiment. In the embodiment depicted in Fig. 4 the first transceiver 100 corresponds to a mobile transceiver and the second transceiver 200 and the third transceiver 300 correspond to base stations. That is to say the mobile transceiver 100 comprises an embodiment of the above described apparatus 10 for transmitting using the three polarization direction and the base station transceiver 200 comprises another embodiment of the apparatus 10 for receiving or decoding based on the three decoding directions. In line with the above, the apparatus 10 at the base station transceiver 200 comprises an interface 20 to the other base station transceiver 300, which may also comprise an embodiment of the apparatus 10, in which the control module 14 is adapted to provide the respective information on the receive signals.

Fig. 4 depicts an uplink transmission. That is to say transmission is carried out from a tri-polarized antenna 16 at the mobile transceiver 100 to several receive antenna sites, for example, base stations 200 and 300. In the uplink the terminal 100 can use the three antenna elements 16a, 16b, 16c to transmit to two base stations 200, 300 in such a way that each of the base stations 200, 300 can receive and decode one or two of the three transmitted polarization directions. Alternatively, the two base stations 200, 300 may jointly receive all three polarization directions. For this, the receivers at different sites 200, 300 may exchange receive data using the interface 20, or the received signals may be transmitted to a central network element, which then comprises an embodiment of the apparatus 10 with the interface 20, with a receiver/control module 14 for separating the three data streams. A single receiver equipped with cross-polarized antenna would receive a superposition of three signals in two polarization directions. This means that at least two different receiving sites are used in such embodiments to separate the three signals.

The received signal can be written as

$$
\begin{bmatrix} r_{1v} \\ r_{1h} \\ r_{2v} \\ r_{2h} \end{bmatrix} = \begin{bmatrix} h_{1v,v} & \sqrt{\chi}h_{1v,h1} & \sqrt{\chi}h_{1v,h2} \\ \sqrt{\chi}h_{1h,v} & h_{1h,h1} & h_{1h,h2} \\ h_{2v,v} & \sqrt{\chi}h_{2v,h1} & \sqrt{\chi}h_{2v,h2} \\ \sqrt{\chi}h_{2h,v} & h_{2h,h1} & h_{2h,h2} \end{bmatrix} \begin{bmatrix} p_{11} & p_{12} & p_{13} \\ p_{21} & p_{22} & p_{23} \\ p_{31} & p_{32} & p_{33} \end{bmatrix} \begin{bmatrix} s_1 \\ s_2 \\ s_3 \end{bmatrix}.
$$

$$(4)$$

A typical channel matrix may have the form given in equation (4). It is a 4x3 matrix and elements with different polarization directions at input and output have smaller power. A typical precoding matrix (i.e. one typical entry of a codebook) may have the form given in equation (5):

$$
\mathbf{P} = \begin{bmatrix} p_{11} & 0 & 0 \\ 0 & p_{22} & p_{23} \\ 0 & p_{32} & p_{33} \end{bmatrix},
$$

$$(5)$$

which is a 3x3 matrix. It maps a data stream intended for the vertical polarization direction on a first vertical antenna element, e.g. antenna element 16a. Two data streams intended for the horizontal polarization directions are mapped to the two horizontal antenna elements, e.g. antenna elements 16b and 16c. The elements that would send the signal intended for the vertical polarization direction to the horizontal antenna elements or vice versa are set to zero. The matrix has a block diagonal structure. The first block (1x1) is for the vertical direction and the second block (2x2) for the two horizontal directions.

For precoding within the 2x2 sub-matrix for the two horizontal polarization directions conventional 2x2 MIMO techniques can be used. A special case is the precoding matrix in equation (6):

$$\mathbf{P} = \begin{bmatrix} p_{11} & 0 & 0 \\ 0 & p_{22} & 0 \\ 0 & 0 & p_{33} \end{bmatrix}. \tag{6}$$

Here, data stream 2 is mapped to one horizontal antenna element, e.g. antenna element 16b, and stream 3 is mapped to the second horizontal element, e.g. antenna element 16c.

In further embodiments, instead of having a vertical and a horizontal element, a dual-polarized antenna may consist of two elements that have a different angle, e.g. and angle of 45 degrees, to a vertical line. This antenna is a rotated version of the antenna with vertical and horizontal elements.

Since in a realistic channel the horizontal polarization direction behaves differently from the vertical polarization, e.g. due to vertical building fronts and horizontal ground, etc., it is sometimes advantageous to rotate the signal before transmission in such a way that the data streams are not mapped on the polarization directions parallel to the antenna elements, but on the vertical and horizontal directions. Hence, in some embodiments the control module 14 is operable to rotate the signals, e.g. by means of a rotation matrix.

For example, when using cross polarized antennas with +/-45° angle to the vertical line, each of the antennas should transmit an appropriately weighted sum of the signals intended for the vertical and horizontal polarization direction. I.e., a precoding matrix may be generated by multiplying the above precoding matrices for the two elements from the left with a rotation matrix:

$$\begin{bmatrix} \cos\frac{\pi}{4} & -\sin\frac{\pi}{4} \\ \sin\frac{\pi}{4} & \cos\frac{\pi}{4} \end{bmatrix} = \begin{bmatrix} \frac{1}{\sqrt{2}} & -\frac{1}{\sqrt{2}} \\ \frac{1}{\sqrt{2}} & \frac{1}{\sqrt{2}} \end{bmatrix} = \frac{1}{\sqrt{2}}\begin{bmatrix} 1 & -1 \\ 1 & 1 \end{bmatrix}. \tag{7}$$

The 4x3 precoding matrices for two pairs of transmit antenna elements in equations (1), (2), (3) are multiplied by the following rotation matrix, which rotates the signals for the two pairs individually:

$$\begin{bmatrix} \frac{1}{\sqrt{2}} & -\frac{1}{\sqrt{2}} & 0 & 0 \\ \frac{1}{\sqrt{2}} & \frac{1}{\sqrt{2}} & 0 & 0 \\ 0 & 0 & \frac{1}{\sqrt{2}} & -\frac{1}{\sqrt{2}} \\ 0 & 0 & \frac{1}{\sqrt{2}} & \frac{1}{\sqrt{2}} \end{bmatrix} = \frac{1}{\sqrt{2}}\begin{bmatrix} 1 & -1 & 0 & 0 \\ 1 & 1 & 0 & 0 \\ 0 & 0 & 1 & -1 \\ 0 & 0 & 1 & 1 \end{bmatrix}. \tag{8}$$

Alternative rotation matrices (rotation by $-\pi/4$ instead of $\pi/4$) are

$$\frac{1}{\sqrt{2}}\begin{bmatrix} 1 & 1 \\ -1 & 1 \end{bmatrix}, \tag{9}$$

$$\frac{1}{\sqrt{2}} \begin{bmatrix} 1 & 1 & 0 & 0 \\ -1 & 1 & 0 & 0 \\ 0 & 0 & 1 & 1 \\ 0 & 0 & -1 & 1 \end{bmatrix} . \qquad (10)$$

The rotated versions of the precoding matrices in equations (2) and (3) have the structure

$$\mathbf{P'} = \frac{1}{\sqrt{2}} \begin{bmatrix} p_{11} & -p_{22} & 0 \\ p_{11} & p_{22} & 0 \\ p_{31} & 0 & -p_{43} \\ p_{31} & 0 & p_{43} \end{bmatrix} , \qquad (11)$$

$$\mathbf{P''} = \frac{1}{\sqrt{2}} \begin{bmatrix} p_{11} & -p_{22} & -p_{23} \\ p_{11} & p_{22} & p_{23} \\ p_{31} & -p_{42} & -p_{43} \\ p_{31} & p_{42} & p_{43} \end{bmatrix} . \qquad (12)$$

A further advantage of this rotation is that the matrix has less zero elements and therefore the antennas and amplifiers are used more efficiently, and the total transmit power can be higher.

For a tri-polarized transmit antenna with two elements with +/-45 degree angle to the vertical and one horizontal element (no vertical element) a pecoding matrix designed for a vertical and two horizontal directions must be multiplied by the rotation matrix

$$\mathbf{T} = \frac{1}{\sqrt{2}} \begin{bmatrix} 1 & -1 & 0 \\ 1 & 1 & 0 \\ 0 & 0 & \sqrt{2} \end{bmatrix} . \qquad (13)$$

The rotated version of the precoding matrix in equation (5) is

$$\mathbf{P'} = \frac{1}{\sqrt{2}} \begin{bmatrix} p_{11} & -p_{22} & -p_{23} \\ p_{11} & p_{22} & p_{23} \\ 0 & \sqrt{2}p_{32} & \sqrt{2}p_{33} \end{bmatrix} , \qquad (14)$$

and that of the matrix in equation (6) is

$$\mathbf{P}'' = \frac{1}{\sqrt{2}} \begin{bmatrix} p_{11} & -p_{22} & 0 \\ p_{11} & p_{22} & 0 \\ 0 & 0 & \sqrt{2}p_{33} \end{bmatrix} . \tag{15}$$

In both cases, the first data stream is transmitted with the same weight from the two elements with 45 degrees angle to the vertical. In equation (14), the second and third data streams are transmitted by all three antenna elements with different weights. In eq. (15), the second data stream is transmitted by the first and second antenna element with different sign, while the third data stream is transmitted by the third element only.

In another embodiment using a tri-polarized antenna, all three of the mutually orthogonal dipoles have the same angle to the vertical line (there is neither a vertical nor a horizontal element). This antenna can be generated from an antenna with vertical and horizontal elements by a rotation that transforms the vector $1/\sqrt{3}(1,1,1)$ to (0,0,1). The corresponding transformation matrix is

$$\mathbf{T} = \frac{1}{\sqrt{6}} \begin{bmatrix} \sqrt{2} & \sqrt{2} & \sqrt{2} \\ -\sqrt{3} & \sqrt{3} & 0 \\ -1 & -1 & 2 \end{bmatrix} . \tag{16}$$

To map data streams to the vertical and horizontal polarization directions the transmit signal vectors may be rotated by the inverse matrix before transmitting them with the antenna elements. Since the rotation matrix is unitary, the inverse is equal to the Hermitian. Since it is real, the inverse is equal to the transposed.

$$\mathbf{T}^{-1} = \mathbf{T}^{\mathrm{H}} = \mathbf{T}^{\mathrm{T}} = \frac{1}{\sqrt{6}} \begin{bmatrix} \sqrt{2} & -\sqrt{3} & -1 \\ \sqrt{2} & \sqrt{3} & -1 \\ \sqrt{2} & 0 & 2 \end{bmatrix} . \tag{17}$$

The rotated versions of the precoding matrices in equations (5) and (6) are now

$$\mathbf{P}' = \frac{1}{\sqrt{6}} \begin{bmatrix} \sqrt{2}p_{11} & -\sqrt{3}p_{22} - p_{32} & -\sqrt{3}p_{23} - p_{33} \\ \sqrt{2}p_{11} & \sqrt{3}p_{22} - p_{32} & \sqrt{3}p_{23} - p_{33} \\ \sqrt{2}p_{11} & 2p_{32} & 2p_{33} \end{bmatrix} , \tag{18}$$

and

$$\mathbf{P}'' = \frac{1}{\sqrt{6}} \begin{bmatrix} \sqrt{2}p_{11} & -\sqrt{3}p_{22} & -p_{33} \\ \sqrt{2}p_{11} & \sqrt{3}p_{22} & -p_{33} \\ \sqrt{2}p_{11} & 0 & 2p_{33} \end{bmatrix} . \tag{19}$$

From equations (18) and (19) it can be seen that the data stream 1 for the vertical polarization direction is transmitted with the same weight from all three antenna elements. In equation (19) data stream 2 for a first horizontal polarization direction is transmitted with the same weight from two antenna elements, and data stream 3 for the second horizontal polarization direction has weight -$p_{33}$ on two antenna elements and weight $2p_{33}$ on the third antenna element. Equations (18) and (19) may be considered typical precoding matrices for that kind of antenna.

As mentioned above, in some embodiments the concept or method may be extended to antenna arrays 18, cf. Fig. 2. For example, an n × m antenna array at the base stations 200, 300 and the UE 100 may be used resulting in higher MIMO orders both in the downlink and in the uplink. In embodiments there may be up to three transmit/receive signals or symbols per antenna of an antenna array. The antenna array may comprise 2 or 3 subarrays each with distinct polarization orientation. In this case beamforming/spatial multiplexing gain from multiple antennas and gain from multiple polarization directions may be combined. Up to three different data streams per antenna may be precoded at the transmitter so that they arrive at the receiver in such a way that it can spatially separate multiple signals containing two polarization directions modulated with up to two different data streams.

In such channels with multiple antennas the channel/precoding matrices can be block matrices, where the blocks are sub-matrices that have the same form as the matrices described in previous sections. A precoding matrix according to another embodiment may have the form of a block matrix of size (4 * n × 3 * *m*) with blocks of size (4×3) for the extension of the above first embodiment and (3*$n$×3*$m$) with blocks of size (3×3) for the extension of the above second embodiment.

The order or sequence of rows and columns may be changed if this is done in all involved matrices and vectors in a compatible way. This may modify the structure of the matrix but not the principle of operation.

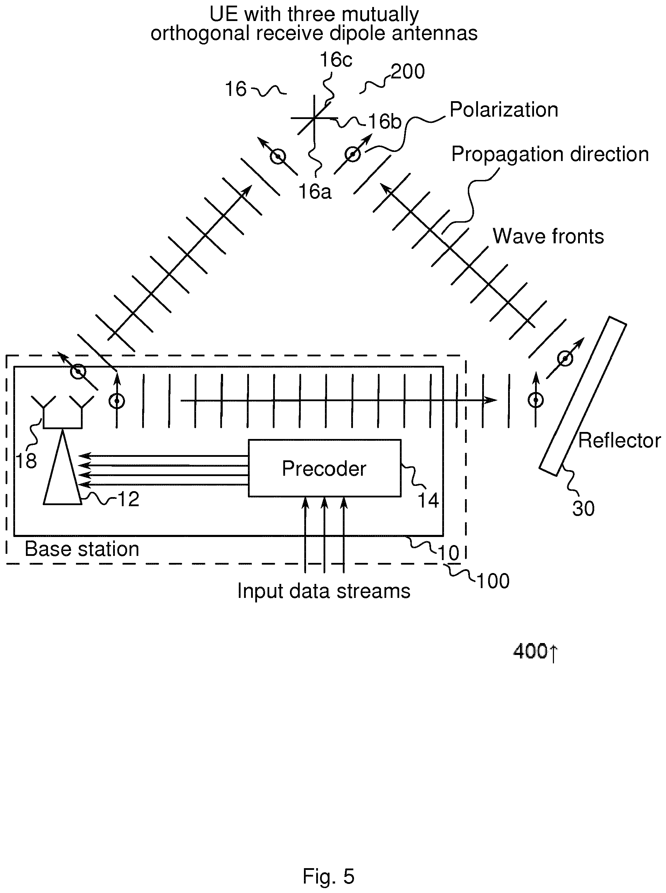

In another embodiment transmission is carried out from a tri-polarized antenna or antenna array to a tri-polarized single antenna. Fig. 5 illustrates a downlink communication scenario with a reflector 30 in an embodiment. In the embodiment illustrated in Fig. 5 the first transceiver 100 corresponds to a base station and the second transceiver 200 corresponds to a mobile station. Again, both base station 100 and mobile station 200 may comprise embodiments of the above described apparatus 10, which is depicted for the base station only in Fig. 5. In Fig. 5 signals transmitted by base station 100 are reflected by a reflector 30 leading to multi path propagation in the radio channel between the base station transceiver 100 and the mobile transceiver 200.

In multipath environments similar effects like with transmitting from two different antenna sites can be achieved, for example by transmitting two or more beams in different directions from a single base station 100 as indicated in Fig. 5. For this, a patch antenna array 18 may be used, as further described in EP13305428.8. Alternatively, an antenna array 18 consisting of antennas with three crossed dipoles can be used. Using conventional cross polarized antenna arrays is also possible but it could be less efficient since they have less degrees of freedom to form the polarized beams. At least one reflector 30 may be present in the channel to provide two independent propagation paths.

In the embodiment shown in Fig. 5 transmit and receive vectors both have three elements, but the rank 3 signal is transmitted from a larger number of transmit antennas. This is described by the following equation:

$$\begin{bmatrix} r_v \\ r_{h1} \\ r_{h2} \end{bmatrix} = \begin{bmatrix} \cdots & h_{v,v} & \sqrt{\chi}h_{v,h1} & \sqrt{\chi}h_{v,h2} & \cdots \\ \cdots & \sqrt{\chi}h_{h1,v} & h_{h1,h1} & h_{h1,h2} & \cdots \\ \cdots & \sqrt{\chi}h_{h2,v} & h_{h2,h1} & h_{h2,h2} & \cdots \end{bmatrix} \begin{bmatrix} \vdots & \vdots & \vdots \\ p_{11} & 0 & 0 \\ 0 & p_{22} & p_{23} \\ 0 & p_{32} & p_{33} \\ \vdots & \vdots & \vdots \end{bmatrix} \begin{bmatrix} s_1 \\ s_2 \\ s_3 \end{bmatrix} \quad . \ (20)$$

A typical channel matrix may contain 3×3 sub-matrices of the form indicated in equation (20). A typical entry of a precoding codebook may comprise 3×3 sub-blocks in the form of the matrix in equation (5) as also indicated in equation (20).

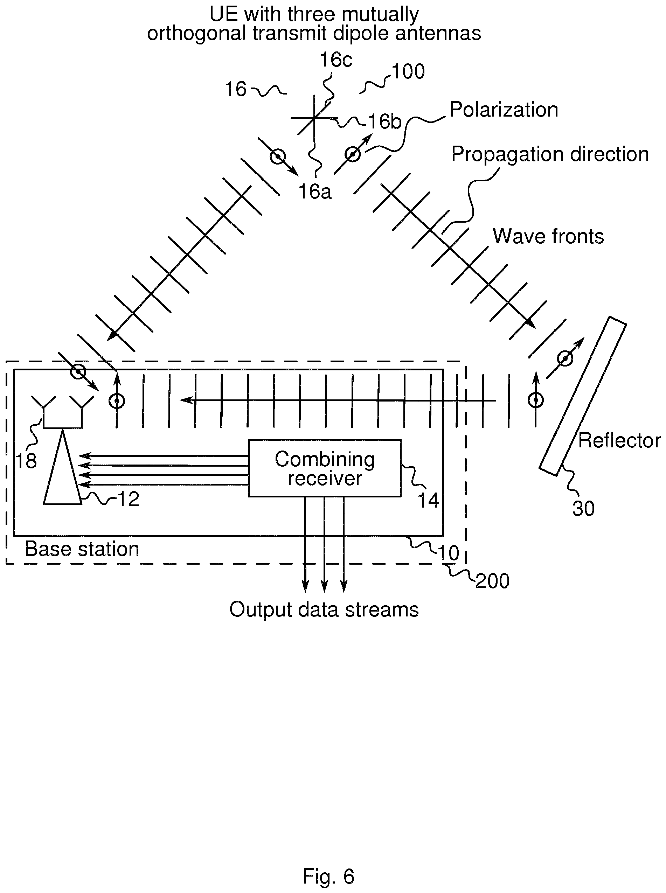

Fig. 6 illustrates an uplink communication scenario with a reflector 30 in an embodiment. In the embodiment illustrated in Fig. 6 the first transceiver 100 corresponds to a mobile station and the second transceiver 200 corresponds to a base station. Again, both mobile transceiver 100 and base station 200 may comprise embodiments of the above described apparatus 10, which is depicted for the base station only in Fig. 6. In Fig. 6 signals transmitted by mobile transceiver 100 are reflected by a reflector 30 leading to multi path propagation in the radio channel between the mobile transceiver 100 and the base station transceiver 200. Fig. 6 illustrates transmission from a tri-polarized antenna 16 to a tri-polarized antenna array 18. In the uplink, precoding for the three transmit antenna elements 16a, 16b, 16c can be done in such a way that a base station 200 equipped with an antenna array 18 for three polarization directions receives pairs of polarization directions from at least two different directions, cf. Fig. 6.

By using a tri-polarized antenna array 18 in the embodiment of Fig. 6 the number of degrees of freedom is 3 per antenna and not limited to two per antenna as with cross polarized antennas. This may allow for a better exploitation of the multiple polarization directions in a multipath channel. The 3 transmit data streams are mapped to three transmit antenna elements 16a, 16b, 16c by a 3×3 precoding matrix and then are received by multiple receive antennas 18 each with 3 elements:

$$
\begin{bmatrix} \vdots \\ r_v \\ r_{h1} \\ r_{h2} \\ \vdots \end{bmatrix} = \begin{bmatrix} \vdots & \vdots & \vdots \\ h_{v,v} & \sqrt{\chi}h_{v,h1} & \sqrt{\chi}h_{v,h2} \\ \sqrt{\chi}h_{h1,v} & h_{h1,h1} & h_{h1,h2} \\ \sqrt{\chi}h_{h2,v} & h_{h2,h1} & h_{h2,h2} \\ \vdots & \vdots & \vdots \end{bmatrix} \begin{bmatrix} p_{11} & 0 & 0 \\ 0 & p_{22} & p_{23} \\ 0 & p_{32} & p_{33} \end{bmatrix} \begin{bmatrix} s_1 \\ s_2 \\ s_3 \end{bmatrix}
$$

$$(21)$$

Typical precoding matrices may be those from equations (5) and (6).

In another embodiment tri-polarized antenna arrays may be used at transmitter and receiver. When both transmitter and receiver are equipped with tri-polarized antenna arrays, multiple triples of data streams can be sent and received by using spatial multiplexing techniques:

$$
\begin{bmatrix} \vdots \\ r_v \\ r_{h1} \\ r_{h2} \\ \vdots \end{bmatrix} = \begin{bmatrix} \ddots & \vdots & \vdots & \vdots & \iddots \\ \cdots & h_{v,v} & \sqrt{\chi}h_{v,h1} & \sqrt{\chi}h_{v,h2} & \cdots \\ \cdots & \sqrt{\chi}h_{h1,v} & h_{h1,h1} & h_{h1,h2} & \cdots \\ \cdots & \sqrt{\chi}h_{h2,v} & h_{h2,h1} & h_{h2,h2} & \cdots \\ \iddots & \vdots & \vdots & \vdots & \ddots \end{bmatrix} \begin{bmatrix} \ddots & \vdots & \vdots & \vdots & \iddots \\ \cdots & p_{11} & 0 & 0 & \cdots \\ \cdots & 0 & p_{22} & p_{23} & \cdots \\ \cdots & 0 & p_{32} & p_{33} & \cdots \\ \iddots & \vdots & \vdots & \vdots & \ddots \end{bmatrix} \begin{bmatrix} \vdots \\ s_1 \\ s_2 \\ s_3 \\ \vdots \end{bmatrix}
$$

$$(22)$$

This can be done both in uplink and in downlink. Moreover, in some embodiments multiple terminals may be used. The above described interface 20 can then allow communication between two terminals or mobile transceivers. The above described concepts or methods may be extended to multiple terminals. In that case the transmit/receive antennas on the terminal side may belong to different terminals.

In further embodiments the above described apparatus 10 may be comprised in or located at a central unit. The central unit, the control module 14 therein, respectively, may decide on the number of sites and the precoding matrices to be used for transmitting/receiving to/from a terminal based on the channel matrix properties (e.g., rank, eigenvalue spectrum, etc.). Mechanisms for channel measurement and reporting may be adapted to the described channel matrices and their statistics (as described above). The requirements on synchronization and calibration may typically be already fulfilled by synchronized CoMP networks. Additionally to increasing throughput, by increasing the array size, the power efficiency may be improved in embodiments by distributing the transmitted data on more degrees of freedom. E.g. by beamforming the transmitted energy may be directed to a specific receiver, a spatial null respectively.

Embodiments may increase the throughput by exploiting the third polarization degree either by harvesting the spatial separation of the transmitters in cooperating networks or simply by using multiple dominant paths in a multi-path environment. Embodiments may be integrated in future network layouts like CoMP, HetNet, Metro, etc. Some embodiments may allow increasing the throughput by up to 50% compared to cross-polarized antennas (with 2 polarization directions).

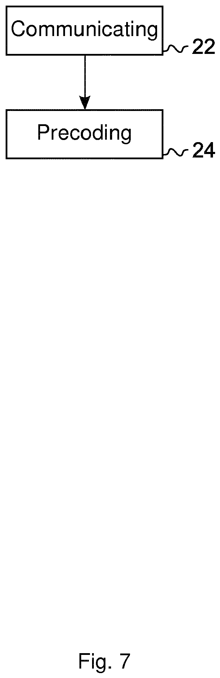

Fig. 7 shows a block diagram of a flow chart of an embodiment of a method for a transceiver of a mobile communication system. The method comprises communicating 22 with a second transceiver 200 using one or more antennas 16, 18, and precoding 24 signals communicated to the second transceiver 200 based on three basically perpendicular polarization directions.

Some embodiments comprise a digital control circuit installed within the apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer, a digital processor, or a programmable hardware component.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant). The functions of the various elements shown in the Figures, including any functional blocks labeled as "means", "means for controlling", "means for transmitting", "means for receiver", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

**1.** An apparatus (10) operable in a first transceiver (100) of a mobile communication system, the apparatus (10) comprising

a transceiver module (12) operable to communicate with a second transceiver (200) using one or more antennas (16; 18), wherein each antenna (16) comprises multiple antenna elements (16a, 16b, 16c) at almost the same position, whereby one or more first antenna elements (16a), one or more second antenna elements (16b), and one or more third antenna elements (16c) are adapted to three polarization directions which are basically perpendicular; and a control module (14) operable to:

control the transceiver module (12), determine an information related to the three basically perpendicular polarization directions of a joint radio channel including a radio channel between the first transceiver (100) and the second transceiver (200) and a radio channel between a third transceiver (300) and the second transceiver (200), and to provide the information partly to the second transceiver (200) using a first codebook index and partly to the third transceiver (300) using a second codebook index,
precode signals to be communicated to the second transceiver (200) based on the information.

2. The apparatus (10) of claim 1, wherein one of the first and second transceivers (100; 200) corresponds to a mobile transceiver and wherein the other one of the first and second transceivers (100; 200) corresponds to a base station transceiver.

3. The apparatus (10) of claim 1, wherein the control module (14) is operable to precode a first signal to be transmitted by the transceiver module (12) using the one or more first antenna elements (16a) together with a second signal to be transmitted by the transceiver module (12) using the one or more second antenna elements (16b) and a third signal to be transmitted by the transceiver module (12) using the one or more third antenna elements (16c), wherein at least two of the first, second and third one or more antenna elements (16a; 16b; 16c) are grouped into one or more cross-polarized antenna elements.

4. The apparatus (10) of claim 1, wherein the control module (14) is operable to use spatial multiplexing within one or more of the first, second and/or third antenna elements, and/or wherein the control module (14) is operable to use beamforming within one or more of the first, second and/or third antenna elements (16a; 16b; 16c; 18) and wherein the control module (14) is operable to form at least one beam based on a further information related to polarization properties of a radio channel between the first and second transceivers (100; 200).

5. The apparatus (10) of claim 1, further comprising an interface (20) to the third transceiver (300) and wherein at least one of the precoded signals is provided to the third transceiver (300) for transmission to the second transceiver (200) and/or wherein the control module (14) is operable to receive a signal from the third transceiver (300) using an interface (20) and wherein the control module (14) is operable to combine the receive signal from the third transceiver (300) with one or more signals received by the transceiver module (12) to decode data based on the three basically perpendicular polarization directions.

6. The apparatus (10) of claim 1, wherein the control module (14) is operable to precode signals of three different data streams to be communicated on the three basically perpendicular polarization directions, and/or wherein the control module (14) is operable to rotate signals across the three basically perpendicular polarization directions using precoding before transmitting the signals.

7. The apparatus (10) of claim 6, wherein the control module (14) is operable to transmit a first one of the three data streams from the first transceiver (100) to the second transceiver (200), a second one of the three data streams from a third transceiver (300) to the second transceiver (200), and a third one of the three data streams from the first and third transceivers (100; 300) to the second transceiver (200).

8. The apparatus (10) of claim 1, wherein the transceiver module (12) is operable to receive signals based on the three basically perpendicular polarization directions and wherein the control module (14) is operable to decode different data streams based on the signals received through the three basically perpendicular polarization directions.

9. The apparatus (10) of claim 1, wherein the transceiver module (12) is operable to receive a further information related to the three basically perpendicular polarization directions of a radio channel between the first transceiver (100) and the second transceiver (200) from the second transceiver (200), and wherein the control module (14) is operable to precode signals to be communicated to the second transceiver (200) based on the further information, and/or wherein the control module (14) is operable to rotate signals to be communicated to the second transceiver (200) based on the further information.

**10.** The apparatus (10) of claim 1, wherein the control module (14) is further operable to determine a further information related to the three basically perpendicular polarization directions of a radio channel between the first transceiver (100) and the second transceiver (200), and to provide the further information to the second transceiver (200).

**11.** The apparatus (10) of claim 10, wherein the control module (14) is operable to provide the further information to the second transceiver (200) using a codebook index.

**12.** The apparatus (10) of claim 11, wherein the codebook comprises an integer multiple of three of complex weights and wherein the complex weights have different magnitudes for different polarization directions.

**13.** A method for a first transceiver (100) of a mobile communication system, the method:

controlling the operability of communicating (22) with a second transceiver (200) using one or more antennas (16; 18), wherein each antenna (16) comprises multiple antenna elements (16a, 16b, 16c) at almost the same position, whereby one or more first antenna elements (16a), one or more second antenna elements (16b), and one or more third antenna elements (16c) are adapted to three polarization directions which are basically perpendicular; determining an information related to the three basically perpendicular polarization directions of a joint radio channel including a radio channel between the first transceiver (100) and the second transceiver (200) and a radio channel between a third transceiver (300) and the second transceiver (200), and controlling the operability of providing the information partly to the second transceiver (200) using a first codebook index and partly to the third transceiver (300) using a second codebook index, precoding signals to be communicated to the second transceiver (200) based on the information.

**14.** A computer program having a program code for performing the method of claim 13, when the computer program is executed on a computer, a processor, or a programmable hardware component.

**Patentansprüche**

**1.** Vorrichtung (10), betreibbar in einem ersten Transceiver (100) eines mobilen Kommunikationssystems, wobei die Vorrichtung (10) umfasst:

ein Transceiver-Modul (12), betreibbar zum Kommunizieren mit einem zweiten Transceiver (200) unter Benutzen einer oder mehrerer Antennen (16; 18), wobei jede Antenne (16) mehrere Antennenelemente (16a, 16b, 16c) an fast derselben Position umfasst, wobei ein oder mehrere erste Antennenelemente (16a), ein oder mehrere zweite Antennenelemente (16b) und ein oder mehrere dritte Antennenelemente (16c) ausgelegt sind für drei Polarisationsrichtungen, die im Wesentlichen rechtwinklig sind; und ein Steuermodul (14), das betreibbar ist zum:

Steuern des Transceiver-Moduls (12), Bestimmen einer Information, die mit den drei im Wesentlichen rechtwinkligen Polarisationsrichtungen eines gemeinsamen Funkkanals zusammenhängt, einschließlich eines Funkkanals zwischen dem ersten Transceiver (100) und dem zweiten Transceiver (200) und eines Funkkanals zwischen einem dritten Transceiver (300) und dem zweiten Transceiver (200), und zum Bereitstellen der Information teilweise dem zweiten Transceiver (200) unter Verwenden eines ersten Codebuchindex und teilweise dem dritten Transceiver (300) unter Verwenden eines zweiten Codebuchindex, Vorcodieren von Signalen, die dem zweiten Transceiver (200) übermittelt werden müssen auf Grundlage der Information.

**2.** Vorrichtung (10) nach Anspruch 1, wobei einer des ersten und des zweiten Transceivers (100; 200) einem mobilen Transceiver entspricht und wobei der andere des ersten und des zweiten Transceivers (100; 200) einem Basisstation-Transceiver entspricht.

**3.** Vorrichtung (10) nach Anspruch 1, wobei das Steuermodul (14) betreibbar ist zum Vorcodieren eines ersten Signals, das von dem Transceiver-Modul (12) übermittelt werden muss unter Verwenden des einen oder der mehreren ersten Antennenelemente (16a) zusammen mit einem zweiten Signal, das übermittelt werden muss von dem Transceiver-Modul (12) unter Verwenden des einen oder der mehreren zweiten Antennenelemente (16b), und eines dritten Signals, das übermittelt werden muss von dem Transceiver-Modul (12) unter Verwenden des einen der der mehreren dritten Antennenelemente (16c), wobei mindestens zwei der ersten, zweiten und dritten einen oder mehreren Antennenelemente (16a; 16b; 16c) in einem oder mehreren kreuzpolarisierten Antennenelementen gruppiert sind.

4. Vorrichtung (10) nach Anspruch 1,
wobei das Steuermodul (14) betreibbar ist zum Verwenden räumlichen Multiplexings innerhalb eines oder mehrerer der ersten, zweiten und/oder dritten Antennenelemente, und/oder wobei das Steuermodul (14) betreibbar ist zum Verwenden von Beamforming innerhalb eines oder mehrerer der ersten, zweiten und/oder dritten Antennenelemente (16a; 16b; 16c; 18) und wobei das Steuermodul (14) betreibbar ist zum Bilden mindestens eines Strahls auf Grundlage einer weiteren Information, die bezogen ist auf die Polarisationseigenschaften eines Funkkanals zwischen dem ersten und dem zweiten Transceiver (100; 200).

5. Vorrichtung (10) nach Anspruch 1, weiterhin umfassend eine Schnittstelle (20) zum dritten Transceiver (300) für die Übertragung auf den zweiten Transceiver (200) und/oder wobei das Steuermodul (14) betreibbar ist zum Empfangen eines Signals von dem dritten Transceiver (300) unter Verwenden einer Schnittstelle (20) und wobei das Steuermodul (14) betreibbar ist zum Kombinieren des empfangenen Signals von dem dritten Transceiver (300) mit einem oder mehreren Signalen, die von dem Transceiver-Modul (12) empfangen werden, zum Decodieren von Daten auf Grundlage der drei im Wesentlichen rechtwinkligen Polarisationsrichtungen.

6. Vorrichtung (10) nach Anspruch 1, wobei das Steuermodul (14) betreibbar ist zum Vorcodieren von Signalen von drei unterschiedlichen Datenströmen, die übermittelt werden müssen auf die drei im Wesentlichen rechtwinkligen Polarisationsrichtungen, und/oder wobei das Steuermodul (14) betreibbar ist zum Rotieren der Signale über die drei im Wesentlichen rechtwinkligen Polarisationsrichtungen unter Verwenden der Vorcodierung, bevor die Signale gesendet werden.

7. Vorrichtung (10) nach Anspruch 6, wobei das Steuermodul (14) betreibbar ist zum Senden eines ersten der drei Datenströme von dem ersten Transceiver (100) zum zweiten Transceiver (200), eines zweiten der drei Datenströme von einem dritten Transceiver (300) zum zweiten Transceiver (200), und eines dritten der drei Datenströme von dem ersten und dem dritten Transceiver (100; 300) zum zweiten Transceiver (200).

8. Vorrichtung (10) nach Anspruch 1, wobei das Transceiver-Modul (12) betreibbar ist zum Empfangen von Signalen auf Grundlage der drei im Wesentlichen rechtwinkligen Polarisationsrichtungen und wobei das Steuermodul (14) betreibbar ist zum Decodieren unterschiedlicher Datenströme auf Grundlage der Signale, die über die drei im Wesentlichen rechtwinkligen Polarisationsrichtungen empfangen wurden.

9. Vorrichtung (10) nach Anspruch 1, wobei das Transceiver-Modul (12) betreibbar ist zum Empfangen weiterer Information, die mit den drei im Wesentlichen rechtwinkligen Polarisationsrichtungen eines Funkkanals zwischen dem ersten Transceiver (100) und dem zweiten Transceiver (200) verbunden ist, von dem zweiten Transceiver (200), und wobei das Steuermodul (14) betreibbar ist zum Vorcodieren von Signalen, die auf den zweiten Transceiver (200) übermittelt werden müssen auf Grundlage der weiteren Information und/oder wobei das Steuermodul (14) betreibbar ist zum Rotieren von Signalen, die dem zweiten Transceiver (200) übermittelt werden müssen auf Grundlage der weiteren Information.

10. Vorrichtung (10) nach Anspruch 1, wobei das Steuermodul (14) weiterhin betreibbar ist zum Bestimmen einer weiteren Information, die mit den drei im Wesentlichen rechtwinkligen Polarisationsrichtungen eines Funkkanals zwischen dem ersten Transceiver (100) und dem zweiten Transceiver (200) verbunden ist, und zum Bereitstellen der weiteren Information für den zweiten Transceiver (200).

11. Vorrichtung (10) nach Anspruch 10, wobei das Steuermodul (14) betreibbar ist zum Bereitstellen der weiteren Information für den zweiten Transceiver (200) unter Verwenden eines Codebuchindex.

12. Vorrichtung (10) nach Anspruch 11, wobei das Codebuch umfasst ein ganzzahliges Vielfaches von drei komplexen Gewichten und wobei die komplexen Gewichte verschiedene Größen für verschiedene Polarisationsrichtungen aufweisen.

13. Verfahren für einen ersten Transceiver (100) eines mobilen Kommunikationssystems, wobei das Verfahren umfasst:

Steuern der Bedienbarkeit der Kommunikation (22) mit einem zweiten Transceiver (200) unter Verwenden einer oder mehrerer Antennen (16; 18), wobei jede Antenne (16) mehrere Antennenelemente (16a; 16b; 16c) an fast derselben Position umfasst, wobei ein oder mehrere erste Antennenelemente (16a) und ein oder mehrere zweite Antennenelemte (16b) und ein oder mehrere dritte Antennenelemente (16c) ausgelegt sind für drei Polarisationsrichtungen, die im Wesentlichen rechtwinklig sind;

Bestimmen einer Information, die mit den drei im Wesentlichen rechtwinkligen Polarisationsrichtungen eines gemeinsamen Funkkanals zu tun hat, einschließlich eines Funkkanals zwischen dem ersten Transceiver (100) und dem zweiten Transceiver (200) und eines Funkkanals zwischen einem dritten Transceiver (300) und dem zweiten Transceiver (200), und

Steuern der Bedienbarkeit des Bereitstellens der Information, teilweise für den zweiten Transceiver (200) unter Verwenden eines ersten Codebuchindex und teilweise für den dritten Transceiver (300) unter Verwenden eines zweiten Codebuchindex,

Vorcodieren von Signalen, die dem zweiten Transceiver (200) übermittelt werden müssen auf Grundlage der Information.

14. Computerprogramm, das einen Programmcode aufweist für das Durchführen des Verfahrens nach Anspruch 13, wenn das Computerprogramm auf einem Computer, einem Prozessor oder einer programmierbaren Hardware-Komponente ausgeführt wird.

## Revendications

1. Appareil (10) utilisable dans un premier émetteur-récepteur (100) d'un système de communication mobile, l'appareil (10) comprenant

   un module émetteur-récepteur (12) permettant de communiquer avec un deuxième émetteur-récepteur (200) à l'aide d'une ou plusieurs antennes (16 ; 18), dans lequel chaque antenne (16) comprend plusieurs éléments d'antenne (16a, 16b, 16c) quasiment au même emplacement, un ou plusieurs premiers éléments d'antenne (16a), un ou plusieurs deuxièmes éléments d'antenne (16b) et un ou plusieurs troisièmes éléments d'antenne (16c) étant adaptés à trois directions de polarisation qui sont pratiquement perpendiculaires ; et

   un module de commande (14) permettant de :

   commander le module émetteur-récepteur (12),
   déterminer une information relative aux trois directions de polarisation pratiquement perpendiculaires d'un canal radio commun incluant un canal radio entre le premier émetteur-récepteur (100) et le deuxième émetteur-récepteur (200) et un canal radio entre un troisième émetteur-récepteur (300) et le deuxième émetteur-récepteur (200), et délivrer l'information en partie au deuxième émetteur-récepteur (200) en utilisant un premier index de livre de codes et en partie au troisième émetteur-récepteur (300) en utilisant un deuxième index de livre de codes,
   précoder les signaux à transmettre au deuxième émetteur-récepteur (200) en fonction de l'information.

2. Appareil (10) selon la revendication 1, dans lequel l'un des premier et deuxième émetteurs-récepteurs (100 ; 200) correspond à un émetteur-récepteur mobile et dans lequel l'autre des premier et deuxième émetteurs-récepteurs (100 ; 200) correspond à un émetteur-récepteur de station de base.

3. Appareil (10) selon la revendication 1, dans lequel le module de commande (14) permet de précoder un premier signal à transmettre par le module émetteur-récepteur (12) à l'aide du ou des premiers éléments d'antenne (16a) en même temps qu'un deuxième signal à transmettre par le module émetteur-récepteur (12) à l'aide du ou des deuxièmes éléments d'antenne (16b) et qu'un troisième signal à transmettre par le module émetteur-récepteur (12) à l'aide du ou des troisièmes éléments d'antenne (16c), dans lequel au moins deux parmi le premier, le deuxième et le troisième élément du ou des éléments d'antenne (16a ; 16b ; 16c) sont regroupés dans un ou plusieurs éléments d'antenne à polarisation croisée.

4. Appareil (10) selon la revendication 1, dans lequel le module de commande (14) permet d'utiliser le multiplexage spatial au sein d'un ou plusieurs éléments parmi le premier, le deuxième et/ou le troisième éléments d'antenne, et/ou dans lequel le module de commande (14) permet d'utiliser la formation de faisceau au sein d'un ou plusieurs éléments parmi le premier, le deuxième et/ou le troisième éléments d'antenne (16a ; 16b ; 16c ; 18) et dans lequel le module de commande (14) permet de former au moins un faisceau en fonction d'une information supplémentaire relative aux propriétés de polarisation d'un canal radio entre le premier et le deuxième émetteurs-récepteurs (100 ; 200).

5. Appareil (10) selon la revendication 1, comprenant en outre une interface (20) vers le troisième émetteur-récepteur (300) et dans lequel au moins l'un des signaux précodés est délivré au troisième émetteur-récepteur (300) pour transmission au deuxième émetteur-récepteur (200) et/ou dans lequel le module de commande (14) permet de recevoir un signal du troisième émetteur-récepteur (300) à l'aide d'une interface (20) et dans lequel le module de commande (14) permet de combiner le signal reçu du troisième émetteur-récepteur (300) avec un ou plusieurs signaux reçus par le module émetteur-récepteur (12) pour décoder les données basées sur les trois directions de polarisation pratiquement perpendiculaires.

6. Appareil (10) selon la revendication 1, dans lequel le module de commande (14) permet de précoder les signaux de trois flux de données différents à transmettre sur les trois directions de polarisation pratiquement perpendiculaires, et/ou dans lequel le module de commande (14) permet d'effectuer une rotation des signaux entre les trois directions de polarisation pratiquement perpendiculaires en utilisant un précodage avant de transmettre les signaux.

7. Appareil (10) selon la revendication 6, dans lequel le module de commande (14) permet de transmettre un premier des trois flux de données du premier émetteur-récepteur (100) au deuxième émetteur-récepteur (200), un deuxième des trois flux de données d'un troisième émetteur-récepteur (300) au deuxième émetteur-récepteur (200) et un troisième des trois flux de données du premier et du troisième émetteurs-récepteurs (100 ; 300) au deuxième émetteur-récepteur (200).

8. Appareil (10) selon la revendication 1, dans lequel le module émetteur-récepteur (12) permet de recevoir des signaux basés sur les trois directions de polarisation pratiquement perpendiculaires et dans lequel le module de commande (14) permet de décoder des flux de données différents basés sur les signaux reçus via les trois directions de polarisation pratiquement perpendiculaires.

9. Appareil (10) selon la revendication 1, dans lequel le module émetteur-récepteur (12) permet de recevoir une information supplémentaire relative aux trois directions de polarisation pratiquement perpendiculaires d'un canal radio entre le premier émetteur-récepteur (100) et le deuxième émetteur-récepteur (200) du deuxième émetteur-récepteur (200), et dans lequel le module de commande (14) permet de précoder les signaux à transmettre au deuxième émetteur-récepteur (200) en fonction de l'information supplémentaire, et/ou dans lequel le module de commande (14) permet d'effectuer une rotation des signaux à transmettre au deuxième émetteur-récepteur (200) en fonction de l'information supplémentaire.

10. Appareil (10) selon la revendication 1, dans lequel le module de commande (14) permet en outre de déterminer une information supplémentaire relative aux trois directions de polarisation pratiquement perpendiculaires d'un canal radio entre le premier émetteur-récepteur (100) et le deuxième émetteur-récepteur (200), et de fournir l'information supplémentaire au deuxième émetteur-récepteur (200).

11. Appareil (10) selon la revendication 10, dans lequel le module de commande (14) permet de fournir l'information supplémentaire au deuxième émetteur-récepteur (200) à l'aide d'un index de livre de codes.

12. Appareil (10) selon la revendication 11, dans lequel le livre de codes contient un nombre multiple entier de trois de pondérations complexes et dans lequel les pondérations complexes ont des valeurs différentes pour les différentes directions de polarisation.

13. Procédé destiné à un premier émetteur-récepteur (100) d'un système de communication mobile, le procédé comprenant les étapes suivantes :

contrôler l'efficacité opérationnelle de communication (22) avec un deuxième émetteur-récepteur (200) à l'aide d'une ou plusieurs antennes (16, 18), chaque antenne (16) comprenant plusieurs éléments d'antenne (16a, 16b, 16c) quasiment au même emplacement, un ou plusieurs premiers éléments d'antenne (16a), un ou plusieurs deuxièmes éléments d'antenne (16b) et un ou plusieurs troisièmes éléments d'antenne (16c) étant adaptés à trois directions de polarisation qui sont pratiquement perpendiculaires ;
déterminer une information relative aux trois directions de polarisation pratiquement perpendiculaires d'un canal radio commun incluant un canal radio entre le premier émetteur-récepteur (100) et le deuxième émetteur-récepteur (200) et un canal radio entre un troisième émetteur-récepteur (300) et le deuxième émetteur-récepteur (200), et contrôler l'efficacité opérationnelle de la fourniture de l'information en partie au deuxième émetteur-récepteur (200) en utilisant un premier index de livre de codes et en partie au troisième émetteur-récepteur (300) en utilisant un deuxième index de livre de codes ;
précoder les signaux à transmettre au deuxième émetteur-récepteur (200) en fonction de l'information.

**14.** Programme informatique ayant un code de programme destiné à mettre en oeuvre le procédé selon la revendication 13, lorsque le programme informatique est exécuté sur un ordinateur, un processeur ou un composant matériel programmable.

Interface ～20

Third
Transceiver ～300

Control Module ～14

16～ Y

Transceiver Module ～12

～10

100

400↑

Y

Second
Transceiver

200

Fig. 1

Antenna element

Antenna

Antenna array

18

Fig. 2

UE with three mutually
orthogonal receive dipole antennas

Fig. 3

UE with three mutually
orthogonal transmit dipole antennas

Fig. 4

UE with three mutually
orthogonal receive dipole antennas

16c
16 200
16b
Polarization
Propagation direction
16a
Wave fronts

Precoder

18
12
14

Base station
10
100

Reflector
30

Input data streams

400↑

Fig. 5

UE with three mutually
orthogonal transmit dipole antennas

16c

16 ~~ ~~100

~~16b ~~ Polarization

Propagation direction

16a

Wave fronts

Combining
receiver

18

~~12

14

Reflector

30

Base station

~~10

~~200

Output data streams

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010105210 A2
- EP 2375604 A1

- US 20110096851 A1
- EP 13305428 A

**Non-patent literature cited in the description**

- **BRUNO CLERCKX ; CLAUDE OESTGES.** MIMO Wireless Networks. Academic Press, 2013
- **ANDREWS, M.R. ; MITRA, P.P. ; DECARVALHO, R.** Tripling the capacity of wireless communications using electromagnetic polarization. *Nature,* 2001, vol. 409, 316-318
- **QUITIN, F. ; OESTGES, C. ; PANAHANDEH, A. ; HORLIN, F. ; DONCKER, P. D.** Tri-polarized MIMO systems in real-world channels: channel investigation and performance analysis. *Physical Communication,* December 2012, vol. 5 (4), 308-316

- **ARTIGA XAVIER et al.** On the selection of radiating elements for compact indoor massive-multiple input multiple output base stations. *IET MICROWAVES, ANTENNAS & PROPAGATION, THE INSTITUTION OF ENG INEERING AND TECHNOLOGY,* 08 January 2014, vol. 8 (1), 1-9